# EUROPÄISCHE PATENTANMELDUNG

(11) **EP 3 012 007 A1**
(43) Veröffentlichungstag der Anmeldung: **27.04.2016**
(21) Anmeldenummer: 14189827.0
(22) Anmeldetag: 22.10.2014
(51) Int. Cl.: B01D 1/26, A23K 10/38, B01D 3/10, C02F 1/06, B01D 3/06

(54) **Verfahren und Vorrichtung zum Eindampfen eines flüssigen Substrats**

(71) Anmelder: Arnold, Oliver David, 6373 Ennetbürgen (CH)
(72) Erfinder: Arnold, Oliver David, 6373 Ennetbürgen (CH)
(74) Vertreter: Schaad, Balass, Menzl & Partner AG

(57) **Zusammenfassung**

Die vorliegende Erfindung betrifft ein Verfahren und eine Vorrichtung zum Eindampfen eines flüssigen Substrats, insbesondere von Gülle, Schlempe oder Gärresten. Dabei wird das flüssige Substrat mehrfach durch einen Substratkreislauf gefördert, wobei es in N sekundären Heizstufen (31, 33, 35) und einer primären Heizstufe (37) erwärmt und anschliessend in N sekundären Eindampfungsstufen (39, 41, 43) und einer primären Eindampfungsstufe (45) bei reduziertem Druck konzentriert wird. Jeder n-ten sekundären Heizstufe (31, 33, 35) ist die n-te sekundäre Eindampfungsstufe (39, 41, 43) zugeordnet. Die in den sekundären Eindampfungsstufen (39, 41, 43) entstehenden Brüden werden der zugeordneten sekundären Heizstufe (31, 33, 35) zugeführt.

## Beschreibung

Die vorliegende Erfindung betrifft ein Verfahren und eine Vorrichtung zum Eindampfen eines flüssigen Substrats, insbesondere eines wässrigen Substrats mit organischen Abwässern oder Abfällen wie Gülle, Schlempe oder Gärreste.

Regionale Überbestände von Nutztieren verursachen teils grosse Probleme beim Lagern, Transportieren und Ausbringen von Ausscheidungen. Direkte Folge dieser Überschüsse waren Überdüngung und Gewässerverschmutzungen, welche heute aus Umweltschutzgründen durch den Transport in nährstoffärmere Gegenden, teilweise über grosse Strecken, vermieden wird. Dabei werden die Ausscheidungen meist in unbehandelter Form, das heisst mit einem Wasseranteil von über 90%, transportiert.

Dasselbe Problem findet man bei Biogasanlagen, wo nicht selten grosse Mengen an Gärresten und Abwärme anfallen, welche im Falle der Abwärme oft ungenutzt bleibt und bei sinnvoller Abnahme behördlich vergütet würde.

Ähnlich verhält es sich mit behördlichen oder industriellen, teils stark verschmutzen Abwässern, welche teuer oder gar unsachgemäss entsorgt werden. Bei vorhandener Abwärme und geringen Betriebskosten kann es Sinn machen, solche Abwässer thermisch aufzukonzentrieren, um eine deutliche Verminderung des zu entsorgenden Volumens zu erreichen.

Es ist daher wünschenswert, solche Abwässer, Gülle und Gärreste möglichst kostengünstig aufzukonzentrieren und dabei einen möglichst hohen Reinheitsgrad an ausgedampftem Brüdenkondensat zu erzielen. Gleichzeitig sollen möglichst alle ursprünglichen vorhandenen Nährstoffe im Konzentrat gesammelt werden, so dass dieses, beispielsweise als Düngemittel, genutzt werden kann.

Bei bekannten Verfahren zum thermischen Aufkonzentrieren oder Entwässern von Substraten - auch Eindampfen oder Verdampfen bezeichnet - werden oft mehrstufige Anlagen verwendet, um Heizenergie zu sparen. Dabei kann der Brüden der vorangehenden Stufe zur Beheizung der nächsten VerdampferStufe verwendet werden. Eine stufenweise Erniedrigung des Dampfdruckes sorgt dabei für den erforderlichen Temperaturunterschied.

Das Prinzip der mehrstufigen Verdampfung kann bezüglich des Substratkreislaufs grundsätzlich entweder parallel oder seriell gestaltet werden:
- Parallel: Hier operieren die einzelnen Verdampferstufen jeweils getrennt voneinander. Jede Stufe hat ihren eigenen Kreislauf, bestehend aus Pumpe, Wärmetauscher und Verdampfergefäss. Anlagen mit parallel angeordneten Verdampferstufen sind am weitesten verbreitet und werden vorwiegend verwendet, wenn eine hohe Feststoff-Endkonzentrationen erforderlich oder gewünscht ist.
- Seriell: Das Substrat wird in einem Kreislauf durch alle Stufen geführt. Aufgrund der langen Substratführung durch alle Wärmetauscher nacheinander erlaubt diese Anordnung allerdings keine allzu hohen Endkonzentrationen. Serielle Verfahren werden fast ausschliesslich für die thermische Meerwasserentsalzung eingesetzt.

Da beim Eindampfen von Gärresten, Gülle oder anderer Abwässer eher hohe Endkonzentrationen verlangt werden, sind für diese Substrate bis anhin nur parallele Schaltungen bekannt. Hinzu kommt, dass solche Anlagen bisher nur im grossindustriellen Massstab realisiert wurden, da die hohen Investitions- und Betriebskosten erst ab einer gewissen Grösse amortisiert werden konnten.

Entsprechende Verfahren und/oder Vorrichtungen aus dem Stand der Technik sind beispielsweise in den folgenden Dokumenten offenbart:
- DE 41 14 667 A1 offenbart ein Verfahren und eine Vorrichtung zur Aufbereitung tierischer Abfallprodukte. Dabei werden letzter zunächst gelagert zur Bildung von Methangas und anschliessend zentrifugiert und getrocknet. Die Trocknung ist nicht näher beschrieben.
- EP 0 354 656 B1 betrifft ein Verfahren zur kontinuierlichen Behandlung eines Abwasserstroms, der mit flüchtigen, chemisch oxidierbaren Verunreinigungen und nicht flüchtigen Verunreinigungen belastet ist, wobei die oxidierbaren Verunreinigungen einer katalytischen Oxidation unterzogen werden.
- EP 0 176 963 B1 offenbart ein Verfahren und eine Vorrichtung zur Behandlung von Industrieabwässern, insbesondere solche mit polychlorierten Verbindungen, wobei bei einem sauren oder basischen pH-Wert eine einoder mehrstufige Destillation im Unterdruck durchgeführt wird. Die entstehenden Verdampfungsbrüden werden jeweils zur Aufheizung eines nachgeschalteten weiteren Verdampfer benutzt.
- DE 601 14 863 T2 betrifft ein Verfahren zur Biogaserzeugung, wobei die dabei entstehenden Gärreste anschliessend einer Ammoniak-Strippung, einer mechanischen Trennung (Zentrifugieren) und/oder einer Trocknung unterzogen werden.
- DE 10 2010 017 334 A1 offenbart ein Verfahren zur Behandlung von organischen Rückständen aus anaeroben Prozessen, bei dem die organischen Rückstände durch Verdampfen eingedickt werden, wodurch neben dem eingedickten organischen Rückstand ein ammoniakhaltiges Kondensat entsteht. Das Kondensat wird anschliessend einer Ammoniak-Strippung unterzogen.
- WO 2005/056152 A1 offenbart eine mehrstufige Eindampfanlage, bei welcher ein erster Verdampfer über einen Strahl-Nass-Wäscher mit überhitztem, lufthaltigem Abdampf beheizt wird und die Produkt-Brüden der ersten Verdampferstufe über einen mechanischen Kompressor einer zweiten Verdampferstufe zur Beheizung zugeführt wird. Die Brüden müssen also verdichtet werden und werden dann quasi im Gleichstrom zum Substrat der zweiten Verdampferstufe zugeführt.
- DE 10 2012 203 439 A1 betrifft eine Anlage zum Eindampfen eines flüssigen Produkts mit wenigstens zwei produktseitig in Reihe geschalteten Verdampferanordnungen, wobei das Produkt in der ersten Verdampferanordnung vorkonzentriert und in der zweiten weiter aufkonzentriert wird. Die dabei entstehenden Brüden werden jeweils in einer Verdichtungsstufe verdichtet und anschliessend an beide Verdampferanordnungen zu deren Beheizung abgegeben.
- EP 2 404 887 A1 beschreibt ein Verfahren zur Düngemittelproduktion aus Gärresten und eine Vorrichtung zur Realisierung des Verfahrens. Dabei handelt es sich um ein mehrstufiges, paralleles Verfahren, bei welchem das aus den Gärresten ausgedampfte Brüdenkondensat angesäuert und anschliessend noch weiter eingedampft wird. Als Nebenprodukt entsteht eine Ammoniumsulfat-Lösung.

Die aus dem Stand der Technik bekannten Verfahren und Vorrichtungen haben den Nachteil, dass sie relativ grosse und komplizierte Anlagen erfordern, die sich nur für den grosstechnischen Massstab eignen, und zudem auch relativ hohe Energiemengen benötigen, vor allem in Form von elektrischer Energie. Kleinere Anlagen, wie z.B. in EP 2 404 887 A1 oder in DE 10 2010 017 334 A1 offenbart, benötigen für vergleichbare Resultate im Verhältnis noch mehr thermische Energie, können üblicherweise nur batchweise eingesetzt werden und sind apparativ und verfahrenstechnisch aufwändig gestaltet.

Es ist daher eine Aufgabe der vorliegenden Erfindung, das Eindampfen eines flüssigen Substrats auf effiziente, einfache, kostengünstige und energiesparende Weise zu ermöglichen.

Diese Aufgabe wird gelöst durch das Verfahren gemäss Anspruch 1, durch die Vorrichtung gemäss Anspruch 8, sowie durch deren Verwendung gemäss Anspruch 15. Bevorzugte Ausführungsformen sind Gegenstand der abhängigen Ansprüche.

Die vorliegende Erfindung betrifft ein Verfahren zum Eindampfen eines flüssigen Substrats, insbesondere eines wässrigen Substrats.

Unter "Eindampfen" wird im Rahmen der vorliegenden Anmeldung ein thermisches Eindicken, Entwässern oder sonstiges Aufkonzentrieren verstanden.

Beim erfindungsgemässen Verfahren wird das flüssige Substrat mehrfach durch einen Substratkreislauf mit einer primären Heizstufe zum Erwärmen und einer primären Eindampfungsstufe zum Konzentrieren bei reduziertem Druck gefördert. Typischerweise durchläuft das flüssige Substrat den Substratkreislauf mehrere Dutzend Mal oder öfter, bis die gewünschte Endkonzentration erreicht wird.

Vor der primären Heizstufe wird das flüssige Substrat N sekundären Heizstufen zugeführt und dort erwärmt. Und nach dem Erwärmen in der primären Heizstufe wird das flüssige Substrat N sekundären Eindampfungsstufen und anschliessend der primären Eindampfungsstufe zugeführt und dort bei reduziertem Druck konzentriert.

Beim erfindungsgemässen Verfahren durchläuft das flüssige Substrat die sekundären Heizstufen in der Reihenfolge von der ersten zur N-ten und die sekundären Eindampfungsstufen in der Reihenfolge von der N-ten zur ersten.

Die Anzahl N an sekundären Heizstufen entspricht der Anzahl N an sekundären Eindampfungsstufen und ist mindestens 1, d.h. N ≥ 1. Der n-ten sekundären Heizstufe ist die n-te sekundäre Eindampfungsstufe zugeordnet, und in einer sekundären Eindampfungsstufe entstehende Brüden werden der zugeordneten sekundären Heizstufe zugeführt. Jede sekundäre Heizstufe ist also mit einer sekundären Eindampfungsstufe verbunden, und umgekehrt.

Die primäre Heizstufe wird üblicherweise durch Zufuhr externer Wärme oder sonstiger Energie betrieben, während die sekundären Heizstufen zumindest teilweise die Wärme aus den Brüden der jeweiligen zugeordneten sekundären Eindampfungsstufe nutzen. Vorzugsweise werden die sekundären Heizstufen ausschliesslich mit der Wärme aus den Brüden der zugeordneten sekundären Eindampfungsstufen betrieben, ohne Zufuhr weiterer Energie von aussen. Die Wärme für die primäre Heizstufe kann beispielsweise von einer Biogasanlage stammen.

Weitere primäre und/oder sekundäre Heizstufen sind möglich.

In den Eindampfungsstufen herrscht Unterdruck, welcher beispielsweise mittels einer oder mehrere Vakuumpumpen erzeugt werden kann. Durch Absenken des Drucks in den Eindampfungsstufen kann die zum Verdampfen notwendige thermische Energie gesenkt werden, d.h. die zu verdampfende Flüssigkeit - insbesondere Wasser - siedet schon bei einer tieferen Temperatur. Üblicherweise findet in den Eindampfungsstufen keine weitere Erwärmung des Substrats statt, und der Druck und die Temperatur nehmen von der N-ten zur ersten Eindampfungsstufe hin ab. Durch den von Stufe zu Stufe abnehmenden Druck wird die mehrstufige Verdampfung bei ebenfalls abnehmender Temperatur ermöglicht.

Die Brüden aus den sekundären Eindampfungsstufen werden zumindest teilweise den zugeordneten sekundären Heizstufen zugeführt. Nach der Verwendung in der jeweiligen sekundären Heizstufe können die Brüden und/oder das Brüdenkondensat ganz oder teilweise einer tieferen sekundären Heizstufe zugeführt werden - in welchem Fall die Brüden und/oder das Brüdenkondensat quasi im Gegenstrom zum flüssigen Substrat geleitet werden - und/oder mit dem Brüden und/oder dem Brüdenkondensat aus der primären Verdampfungsstufe kombiniert werden.

Vorzugsweise werden die Brüden bei der Wärmeabgabe an die jeweilige Heizstufen kondensiert. Die Brüdenkondensate können anschliessend kombiniert werden. Alternativ ist es aber auch möglich, die kombinierten Brüden zu kondensieren. Die Brüden aus der primären Eindampfungsstufe können optional auch ganz oder teilweise zur Vorwärmung von frischem oder bereits behandeltem flüssigen Substrat verwendet werden.

Weitere primäre und/oder sekundäre Eindampfungsstufen sind möglich.

Durch das erfindungsgemässe Verfahren lässt sich ein flüssiges Substrat auf einfache und unkomplizierte Weise eindampfen, so dass ein Konzentrat mit im Vergleich zum Substrat tieferem Flüssigkeitsanteil und ein flüssiges Kondensat, insbesondere Wasser, gewonnen werden kann. Dadurch, dass nur ein einziger Substratkreislauf vorhanden ist, ist der apparative Aufwand bei einer solchen Vorrichtung (siehe weiter unten) wesentlich kleiner als bei vorbekannten Vorrichtungen, insbesondere was Pumpen, Leitungen und Ventile betrifft, und der Energiebedarf deutlich geringer, so dass das Verfahren auch bei kleineren Betrieben durchgeführt werden kann.

Im Gegensatz dazu benötigen aus dem Stand der Technik bekannte kleinere Anlagen deutlich mehr thermische Energie für vergleichbare Resultate, weil diese bei einer für Abwärme aus einem Blockheizkraftwerk (BHKW) typischen Temperatur von 85-90 °C für die primäre Heizstufe höchstens zweistufig realisiert werden können. Dadurch sind diese Verfahren apparativ und verfahrenstechnisch aufwändiger und können meist auch nur batchweise betrieben werden.

Das erfindungsgemässe Verfahren erlaubt zudem eine signifikante Einsparung von Heizenergie, indem die sekundären Heizstufen wenigstens teilweise mit der Wärme aus den Brüden der sekundären Verdampfungsstufen betrieben werden.

Allgemein lässt sich sagen, dass mehrstufige parallele Verfahren, wie sie aus dem Stand der Technik bekannt sind, mehr elektrische Energie benötigen als das erfindungsgemässe serielle Verfahren.

Aufgrund der relativ langen, seriellen Substratführung herrscht beim erfindungsgemässen Verfahren ein relativ hoher Druck im Substratkreislauf. Dieser Effekt kann allenfalls zusätzlich mithilfe eines Drosselorgans (z.B. eine Düse oder Blende) nach der primären Heizstufe und vor/am Entgaser bzw. der N- ten Eindampfungsstufe noch weiter verstärkt werden. Zudem arbeitet man vorzugsweise mit kleinen Temperaturunterschieden zwischen Heizmedium und Substrat. Dadurch erfolgt in den Heizstufen keine Überhitzung des Substrats, so dass keine Anbackungen oder Ablagerungen entstehen. Dies führt zu einer Steigerung der Betriebssicherheit.

Dank der seriellen Anordnung der Stufen liegt nur ein einziger zusammenhängender Substratkreislauf vor, durch welchen das flüssige Substrat gefördert wird. Dadurch reicht bereits eine einzige Förderpumpe aus, so dass weitere Kosten gespart werden können.

Zudem erfordert das erfindungsgemässe Verfahren aufgrund der Verwertung der Wärme aus den Brüden wesentlich weniger elektrische Energie als die aus dem Stand der Technik bekannten herkömmlichen Verfahren.

Als flüssige Substrate für das erfindungsgemässe Verfahren eignen sich insbesondere Prozessabwässer, Presswässer, Waschund Spülabwässer, organische Abwässer (= Waschwässer, Weizenund Kartoffelstärkeabwasser, Gülle), Ölemulsionen, Fermentationsbrühen, Schlempen, Gärreste (v.a. aus Biogasanlagen) und ähnliche fliessfähige Materialien.

Gemäss einer bevorzugten Ausführungsform umfasst das flüssige Substrat organische Abwässer oder Abfälle, insbesondere Gülle, Schlempe oder Gärreste. Diese Substrate lassen sich durch das erfindungsgemässe Verfahren auf einfache und besonders energieeffiziente Weise eindampfen. Typische Trockenanteile von Gülle oder Gärresten, falls nötig vorgängig mechanisch separiert, liegen ungefähr im Bereich von 2-5%.

Gemäss einer bevorzugten Ausführungsform wird der Flüssiganteil, insbesondere der Wasseranteil, des flüssigen Substrats um mindestens einen Viertel reduziert, vorzugsweise um mindestens die Hälfte. So kann das Substrat beispielsweise von einem Trockenanteil von 2% auf 4% eingedampft werden, oder von 8% auf 12%, oder gar von 4% auf 25%.

Je nach späterer Anwendung des Konzentrats können andere Endkonzentrationen von Vorteil sein:
Das erfindungsgemässe Verfahren erlaubt ein Eindampfen auf etwa 25-30% Trockenanteil. Dies hat den Vorteil, dass das Volumen deutlich gesenkt und damit der Platzbedarf für die Lagerung, sowie der logistische Aufwand bis zum Ausbringen aufs Feld massiv verringert werden kann. Ausserdem kann das Konzentrat im Anschluss an das erfindungsgemässe Verfahren auch noch weiter getrocknet und beispielsweise zu einem Granulat oder Pellets verarbeitet werden.

Aber auch eine Eindampfung auf einen Trockenanteil von etwa 12% führt bereits zu einem deutlich kleineren Platzbedarf bei Lagerung oder Transport. Zudem ist ein solches Konzentrat üblicherweise noch fliessfähig, so dass es in denselben Einrichtungen gelagert und mit denselben Vorrichtungen ausgebracht werden kann, wie die unbehandelte Gülle.

Gemäss einer bevorzugten Ausführungsform erfolgt das Eindampfen teil-kontinuierlich. Dies bedeutet, dass bei der Durchführung des erfindungsgemässen Verfahrens in einem Zeitabschnitt kontinuierlich weiteres flüssiges Substrat zugeführt wird, während in einem anderen Zeitabschnitt kein zusätzliches flüssiges Substrat zugeführt wird. Es handelt sich also um eine Art Mischform zwischen einer kontinuierlichen und einer batchweisen Verfahrensführung. Das teil-kontinuierliche Eindampfen hat den Vorteil, dass es sehr effizient ist und zudem die Förderpumpe deutlich weniger belastet, weil nur kurzzeitig sehr hohe Viskositäten und Drücke vorliegen. Grundsätzlich wäre es aber auch möglich, das erfindungsgemässe Verfahren kontinuierlich oder batchweise durchzuführen.

Besonders bevorzugt wird in einem ersten Zeitabschnitt kontinuierlich mehr flüssiges Substrat zugeführt, in einem zweiten Zeitabschnitt kein weiteres flüssiges Substrat zugeführt und in einem dritten Zeitabschnitt eingedampftes Konzentrat abgeführt und optional neues flüssiges Substrat zugeführt. Dies erlaubt eine optimale Ausnutzung der Anlage, ohne dass der Eindampf-Prozess während dem Wechsel von konzentriertem zu frischem flüssigem Substrat unterbrochen werden muss.

Vorzugsweise weist frisches flüssiges Substrat, das in den Substratkreislauf eingeführt wird, bereits eine leicht erhöhte Temperatur auf, insbesondere ungefähr dieselbe Temperatur, die in der primären Eindampfungsstufe herrscht. Je nach Herkunft oder Vorbehandlung des frischen flüssigen Substrats ist die Temperatur sowieso bereits erhöht. Ansonsten ist es vorteilhaft, frisches flüssiges Substrat vor dem Einführen in den Substratkreislauf vorzuwärmen, beispielsweise mithilfe von Brüden oder Kondensat aus der primären Eindampfungsstufe, dem Entgaser und/oder einem Trockner.

Gemäss einer bevorzugten Ausführungsform wird das flüssige Substrat zusätzlich behandelt, um gewisse Inhaltsstoffe besser zu binden oder diese im Gegenteil sogar leichter flüchtig zu machen. Typische Beispiele für solche Behandlungen sind die Zugabe von Säure, Base oder einem mit Wasser nicht mischbaren organischen Lösungsmittel, eine NH₃-Strippung oder eine MAP-Fällung. Solche Behandlungen sind beispielsweise auch aus DE 10 2010 017 334 A1 bekannt.

Diese Behandlungen können einzeln oder auch in beliebiger Kombination ins erfindungsgemässe Verfahren eingebaut werden. Durch die Zugabe von Säure kann beispielsweise Ammoniak (NH₃) in ein Ammoniumsalz umgewandelt werden, welches selbst bei reduziertem Druck und während des Eindampfens im Substrat verbleibt. Gleichzeitig können so Ablagerungen von Kalk, Urinstein und ähnlichen Stoffen verhindert werden. Alternativ kann aber auch genau der Umkehrprozess bewirkt werden, indem Base zugegeben wird, so dass das Ammoniak leicht verdampft und später beispielsweise in einem Wäscher wieder gebunden werden kann, während die Säuren in Form von Salzen im Substrat gebunden werden. Die Zugabe eines mit Wasser nicht mischbaren organischen Lösungsmittels ist aus dem Carver-Greenfield-Verfahren bekannt und bewirkt, dass das Substrat leichter gefördert werden kann und, je nach Lösungsmittel, auch weniger schäumt. NH₃-Strippung und MAP-Fällung sind ebenfalls klassische Behandlungen für ammoniakhaltige Abwässer oder Gülle.

Diese Behandlungen können vor, zwischen und/oder nach den Heizstufen erfolgen. Eine MAP-Fällung, beispielsweise, wird vorzugsweise schon vor dem Einführen des flüssigen Substrats in den Substratkreislauf durchgeführt, spätestens aber vor dem Erwärmen. Eine NH₃-Strippung, auf der anderen Seite, wird bevorzugt bei einer möglichst hohen Temperatur durchgeführt, also am besten direkt vor oder nach der primären Heizstufe. Die Zugabe von Säure oder Base kann in verschiedensten Verfahrensstufen sinnvoll sein, da dadurch gesteuert werden kann, welche Anteile zu welchem Zeitpunkt verdampfen sollen. Vorzugsweise erfolgt die Behandlung aber vor dem Einleiten in den Substratkreislauf oder nach der primären Heizstufe.

Gemäss einer bevorzugten Ausführungsform wird das flüssige Substrat vor der N-ten Eindampfungsstufe entgast. Dadurch können leichtflüchtige Komponenten, wie beispielsweise Ammoniak, Phosphor, flüchtige Fettsäuren oder Duftstoffe, vor den eigentlichen Verdampfungsstufen abgetrennt werden, so dass sie nicht im End-Kondensat enthalten sind. Die Entgasung wird typischerweise bei einem leichten Unterdruck durchgeführt, so dass dabei möglichst wenig Wasser verdampft wird. Es ist aber auch möglich, bei der Entgasung geringe Mengen an Luft zuzuführen. Zudem erfolgt die Entgasung besonders bevorzugt bei möglichst hoher Temperatur und somit zwischen der primären Heizstufe und der N-ten Eindampfungsstufe. Alternativ ist es aber auch möglich, im Entgaser eine kleine Menge Wasser mitzuverdampfen, so dass die anderen Gaseinsbesondere Ammoniak - darin gelöst werden können, wobei gleichzeitig die Entgasung verbessert wird. In diesem Fall ist die Zugabe von Säure zum Gas und oder zu einem Wäscherfluid besonders sinnvoll.

Die dabei entstehenden Brüden können über einen Wärmetauscher mittels Kondensation entweder das flüssige Substrat vor der primären Heizstufe erwärmen oder frisches flüssiges Substrat, bevor es in den Substratkreislauf eingeführt wird. Der im letzteren Fall grössere Temperaturunterschied zwischen Brüden und aufzuwärmendem Substrat ist thermisch und strömungstechnisch sinnvoller und verbessert zudem das Entgasen.

Gemäss einer bevorzugten Ausführungsform werden die in den Eindampfungsstufen erhaltenen Brüden gewaschen. Dadurch können darin enthaltene Nährstoffe herausgelöst und in anderer Form gebunden werden. Falls das Substrat zusätzlich entgast wird, werden besonders bevorzugt auch die dabei enthaltenen Gase gewaschen. Durch das Waschen können insbesondere auch flüchtige organische Stoffe, wie zum Beispiel flüchtige Fettsäuren, aus dem Gas entfernt werden. Dies führt zu einer Senkung des CSB- und/oder BSB-Wertes (Chemischer bzw. Biologischer Sauerstoffbedarf) im Kondensat und damit zu tieferen Entsorgungskosten (z.B. für die Reinigung in einer Kläranlage). Als Wäscher kann beispielsweise eine Flüssigkeitsringvakuumpumpe - wobei das Kühlfluid im Kühlkreislauf die Funktion des Wäscherfluids übernehmen kann - ein Strahlwäscher oder eine Art Mischkondensator verwendet werden.

Gemäss einer bevorzugten Ausführungsform wird das flüssige Substrat vorgängig einer mechanischen Trennung unterzogen, um feste Anteile wie Strohteile oder Faserstoffe abzutrennen. Diese könnten sonst die Leitungen des Substratkreislaufs, vor allem in den Wärmetauschern, verstopfen und sind auch sowohl thermisch als auch strömungstechnisch eher hinderlich für den Prozess. Eine solche mechanische Trennung kann beispielsweise mittels Pressschnecken-Separator, Dekanter, Bandfilter, Trommel- oder Bogensieb, Flotation oder einer Kombination dieser Verfahren bewerkstelligt werden. Die dabei abgetrennten Feststoffe können unabhängig vom flüssigen Substrat getrocknet und/oder mit dem Konzentrat mindestens teilweise vereint und, falls gewünscht, in vereinter Form einer weiteren Trocknung zugeführt oder in denselben Trockner rückgeführt werden.

Wenn die abgetrennten Feststoffe und/oder das Konzentrat in einem indirekt beheizten Verfahren, d.h. ohne Zufuhr von Luft oder Abgasen zum zu trocknenden Gut, getrocknet werden, können die dabei entstehenden, oft NH₃-haltigen Brüden dem erfindungsgemässen Eindampfverfahren zugeführt werden. Dazu werden diese Brüden idealerweise direkt nach der primären Heizstufe und vor einer allfälligen Entgasung dem flüssigen Substrat zugeführt. Dadurch kann nicht nur die Wärmeenergie dieser Brüden ausgenutzt werden, sondern auch die darin enthaltenen Nährstoffe direkt ins Substrat aufgenommen werden. Ausserdem erhält man so ein zumindest teilweise getrocknetes Endprodukt mit allen im Ausgangsprodukt vor der mechanischen Trennung enthaltenen Nähr- und Trockenstoffen, und ein Verlust der enthaltenen Nährstoffe wird verhindert.

Das Hauptprodukt des erfindungsgemässen Verfahrens ist üblicherweise das Konzentrat. Dieses enthält viele Nährstoffe und eignet sich daher beispielsweise als Düngemittel. Je nach Verfahrensführung (Zugabe von Säure oder Base, Temperaturund Druckregulierung...) ist es aber auch möglich, selektiv gewisse Nährstoffe im Kondensat oder in einem separaten Kreislauf- oder Wäscherfluid, d.h. in der abgedampften Flüssigphase, zu sammeln.

Unabhängig davon, können sowohl Konzentrat als auch Kondensat im Anschluss an das erfindungsgemässe Verfahren weiter verarbeitet werden, beispielsweise durch weiteres Trocknen oder Aufkonzentrieren, durch Reinigen oder Filtern oder auch durch Pelletieren oder Granulieren. Dadurch eröffnet sich eine grosse Bandbreite an möglichen Anwendungen, vom Düngemittel über Spül- oder Brauchwasser bis zum Trinkwasser.

Das erfindungsgemässe Verfahren wird vorzugsweise mit der unten beschriebenen erfindungsgemässen Vorrichtung ausgeführt.

In einem weiteren Aspekt betrifft die vorliegende Erfindung daher eine Vorrichtung zum Eindampfen eines flüssigen Substrats. Diese Vorrichtung umfasst:
einen Substrateinlass,
einen Substratkreislauf umfassend mehrere Substratleitungen, der mit dem Substrateinlass verbunden ist,
mindestens eine Substratpumpe zum Fördern des flüssigen Substrats durch den Substratkreislauf,
eine primäre Heizstufe zum Erwärmen des flüssigen Substrats, die mit einer Wärmezufuhr verbunden ist,
eine primäre Eindampfungsstufe zum Konzentrieren des erwärmten flüssigen Substrats bei reduziertem Druck, die mit einem Endkondensator verbunden ist,
einen Konzentratauslass, der über eine Konzentratleitung mit der primären Eindampfungsstufe verbunden ist, und
einen Kondensatauslass, der über eine Kondensatleitung mit dem Endkondensator verbunden ist.

Die erfindungsgemässe Vorrichtung ist gekennzeichnet durch:
N seriell angeordnete sekundäre Heizstufen zum Erwärmen des flüssigen Substrats, wobei die erste sekundäre Heizstufe über eine Substratleitung mit dem Substrateinlass verbunden ist, die N-te sekundäre Heizstufe über eine Substratleitung mit der primären Heizstufe verbunden ist und jeweils zwei aufeinander folgende Heizstufen über eine Substratleitung miteinander verbunden sind, und wobei die erste sekundäre Heizstufe über eine Kondensatleitung mit dem Kondensatauslass verbunden ist,
N seriell angeordnete sekundäre Eindampfungsstufen zum Konzentrieren des erwärmten flüssigen Substrats bei reduziertem Druck, wobei die N-te sekundäre Eindampfungsstufe über eine Substratleitung mit der primären Heizstufe verbunden ist, die erste sekundäre Eindampfungsstufe über eine Substratleitung mit der primären Eindampfungsstufe verbunden ist und jeweils zwei aufeinander folgende sekundäre Eindampfungsstufen über eine Substratleitung miteinander verbunden sind,
wobei N ≥ 1 ist und
wobei der n-ten sekundären Heizstufe die n-te sekundäre Eindampfungsstufe zugeordnet und mit dieser über eine Brüdenleitung verbunden ist.

Der Substrateinlass dient der Zufuhr von flüssigem Substrat und umfasst typischerweise ein Ventil oder einen sonstigen Zufuhrregler, über welchen Menge, Druck und Zeitpunkt der Zufuhr geregelt werden können. Vorzugsweise erfolgt diese Regelung über eine Steuerungseinheit.

Durch den Substratkreislauf wird das flüssige Substrat, das eingedampft werden soll, von einer Komponente zur nächsten gefördert. Üblicherweise durchläuft es den Substratkreislauf mehrfach.

"Verbunden" bedeutet im Rahmen der vorliegenden Anmeldung, dass zwischen zwei Komponenten eine Verbindung besteht, die den Transport von Material und/oder Energie von einer Komponente zur anderen erlaubt. Dabei können die beiden Komponenten direkt oder indirekt miteinander verbunden sein, das heisst es können optional auch noch weitere Komponenten zwischen zwei miteinander verbundenen Komponenten vorhanden sein. Zudem kann die Verbindung den Transport in einer oder beiden Richtungen erlauben. Typischerweise wird eine solche Verbindung durch eine Leitung oder einen direkten Kontakt gebildet, beispielsweise durch eine Substrat- oder Brüdenleitung zur Materialförderung oder durch eine direkte Berührung zur Wärmeübertragung.

Das flüssige Substrat wird mittels der Substratpumpe durch den Substratkreislauf gefördert. Je nach Menge des zu fördernden Substrats kann eine grössere oder kleinere Substratpumpe verwendet werden, und allenfalls können auch mehrere Substratpumpen vorhanden sein, falls nötig oder gewünscht. Die Fördermenge kann beispielsweise mithilfe eines Regelventils oder Frequenzumformers geregelt werden.

In der primären Heizstufe wird das flüssige Substrat durch Wärmezufuhr auf eine Maximaltemperatur erwärmt. Die Wärme dafür kann entweder direkt in der erfindungsgemässen Vorrichtung produziert werden - beispielsweise mittels eines Elektroofens oder einer Hackschnitzelheizung, oder von aussen zugeführt werden. Vorzugsweise wird die Wärme von aussen zugeführt, beispielsweise als Abwärme einer Biogasanlage.

In der primären Eindampfungsstufe wird das erwärmte flüssige Substrat bei reduziertem Druck eingedampft und damit aufkonzentriert.

Von der primären Eindampfungsstufe führt eine Konzentratleitung zum Konzentratauslass und eine Kondensatleitung zum Kondensatauslass. Damit können die in der primären Eindampfungsstufe erhaltenen Produkte dem jeweils passenden Auslass zugeführt werden. Die erfindungsgemässe Vorrichtung weist zusätzlich einen Endkondensator auf, wo beim Eindampfen in der primären Eindampfungsstufe entstehende Brüden kondensiert werden.

Wie oben für das erfindungsgemässe Verfahren beschrieben, dienen N seriell angeordnete sekundäre Heizstufen zum Erwärmen des flüssigen Substrats. Dabei wird das flüssige Substrat über die jeweiligen Substratleitungen von der ersten in die zweite usw. und schliesslich in die N-te Heizstufe gefördert und stufenweise erwärmt.

Die primären und sekundären Heizstufen können im Prinzip beliebig ausgestaltet sein, wie aus dem Stand der Technik bekannt. Typischerweise umfassen die Heizstufen aber einen Wärmetauscher, welcher die Wärmeübertragung von einer Wärmequelle auf das flüssige Substrat ermöglicht. Vorzugsweise sind die Heizstufen als Rohrbündel im Gegenstromprinzip ausgestaltet.

Von der ersten sekundären Heizstufe führt zudem eine Kondensatleitung zum Kondensatauslass, so dass die hier zum Erwärmen verwendeten Brüden, idealerweise in kondensierter Form, dem Kondensatauslass zugeführt werden können. Optional führen zudem weitere Kondensatleitungen von einer oder mehreren anderen sekundären Heizstufen zum Kondensatauslass, und/oder es führen Brüden- oder Kondensatleitungen von einer sekundären Heizstufe zu einer anderen. So können die Brüden bzw. die Kondensate entweder direkt von jeder sekundären Heizstufe dem Kondensatauslass zugeführt werden, oder sie können auch - quasi im Gegenstrom zum Substrat - von einer sekundären Heizstufe zu einer tieferen Heizstufe geleitet, dort mit den jeweiligen Brüden/Kondensaten vereinigt und später dem Kondensatauslass zugeführt werden. Idealerweise werden die Brüden aus den sekundären Eindampfungsstufen in den jeweiligen sekundären Heizstufen durch die Wärmeabgabe kondensiert. Alternativ ist es aber auch möglich, das Kondensat jeder Stufe einzeln abzuziehen.

Wie oben für das erfindungsgemässe Verfahren beschrieben, dienen N seriell angeordnete sekundäre Eindampfungsstufen zum Konzentrieren des erwärmten flüssigen Substrats bei reduziertem Druck. Dabei wird das flüssige Substrat über die jeweiligen Substratleitungen von der N-ten in die (N-1)-te usw. und schliesslich in die erste Eindampfungsstufe gefördert und stufenweise aufkonzentriert. Druck und Temperatur nehmen von der N-ten zur ersten Eindampfungsstufe ab.

Auch die primären und sekundären Eindampfungsstufen können im Prinzip beliebig ausgestaltet sein. Vorzugsweise umfassen diese aber ein Entspannungsgefäss. Bei entsprechend geregelten Druckverhältnissen ist in den Eindampfungsstufen kein weiteres Erwärmen des flüssigen Substrats erforderlich: Das Eindampfen erfolgt allein aufgrund des jeweils tieferen Drucks. Optional wäre es aber möglich, auch in den Eindampfungsstufen ein Heizmittel vorzusehen.

Der Unterdruck in den Eindampfungsstufen wird typischerweise durch eine oder mehrere Vakuumpumpe(n) erzeugt. Dabei kann eine einzelne Vakuumleitung vorliegen, an welche alle Eindampfungsstufen und, falls vorhanden, auch der Entgaser (siehe unten) angeschlossen sind, es kann für jede Komponente mit Unterdruck eine eigene Pumpe vorgesehen sein oder es können auch mehrere Komponenten jeweils einer Pumpe zugeordnet sein. Grundsätzlich wäre es auch möglich, die Vakuumleitungen mit den Kondensatleitungen zu vereinen.

Zwischen den einzelnen Eindampfungsstufen ist zudem vorzugsweise jeweils ein Drosselorgan, z.B. ein Ventil oder eine Blende, oder ein sonstiges Mittel zur Regelung der Fördermenge und des Druckes vorhanden.

Die in den sekundären Eindampfungsstufen entstehenden Brüden können über die jeweilige Brüdenleitung zur zugeordneten sekundären Heizstufe geleitet und dort zum Erwärmen des Substrats verwendet werden. Dadurch können signifikant Heizkosten gespart werden. Vorzugsweise findet dabei eine Kondensation der Brüden statt. Die so erhaltenen Kondensate können anschliessend direkt oder indirekt, via weitere sekundäre Heizstufen, dem Kondensatauslass zugeführt werden.

Ein Verdichten der verwendeten Brüden, beispielsweise mittels eines oder mehrerer Kompressoren, ist bei der erfindungsgemässen Vorrichtung nicht notwendig. Dadurch kann zusätzlich Strom gespart werden.

Zusätzlich zu den oben beschriebenen können optional auch noch weitere primäre oder sekundäre Heiz- oder Eindampfungsstufen vorhanden sein.

Diese Vorrichtung eignet sich besonders gut für die Durchführung des oben beschriebenen erfindungsgemässen Verfahrens zum Eindampfen eines flüssigen Substrats, insbesondere von Gülle, Schlempe oder Gärresten.

Das flüssige Substrat durchläuft den Substratkreislauf üblicherweise mehrfach, bis die gewünschte Endkonzentration erreicht ist. Je nach Voraussetzungen (Ausgangskonzentration, gewünschte Endkonzentration, Anzahl Stufen, Temperaturen, Drücke, ...) können beispielsweise etwa 50 Umläufe notwendig sein, um den Wasseranteil um 2-3% zu senken.

Umgekehrt kann aber auch durch die Wahl der Anzahl N an sekundären Heiz- und Eindampfungsstufen und der verwendeten Temperaturen und Drücke die Geschwindigkeit und das Ausmass des Eindampfens beeinflusst werden.

Die verwendeten Temperaturen werden vorzugsweise an die vorhandene Wärmequelle angepasst. So kann beispielsweise die Abwärme einer Biogasanlage - deren Gärreste ja beispielsweise in der erfindungsgemässen Vorrichtung eingedampft werden können - verwendet werden. Solche BHKW-Abwärme liegt üblicherweise bei ca. 85-90 °C. In einem solchen Fall können beispielsweise N = 4 sekundäre Verdampfungsstufen vorgesehen werden, wobei die vom Substrat als erstes passierte 4. Verdampfungsstufe bei einer Temperatur von ca. 69 °C und einem Druck von ca. 300 mbar liegt, die 3. Verdampfungsstufe bei ca. 63 °C und ca. 230 mbar, die 2. Verdampfungsstufe bei ca. 56 °C und ca. 175 mbar, und die erste Verdampfungsstufe bei ca. 42 °C und 80 mbar. Idealerweise beträgt der Temperaturunterschied zwischen zwei benachbarten Eindampfungsstufen mindestens 6 °C, damit der apparative Aufwand und die Wärmetauscherflächen nicht allzu gross werden. Ein allfällig vorhandener Entgaser wird vorzugsweise bei einem Druck von ca. 500 mbar betrieben.

Gemäss einer bevorzugten Ausführungsform umfasst die erfindungsgemässe Vorrichtung 1 bis 12 sekundäre Heiz- und Eindampfungsstufen, d.h. N = 1 bis 12. Dies erlaubt eine optimale Ausnutzung der zugeführten Wärme bei geringem apparativem Aufwand. Besonders bevorzugt umfasst die Vorrichtung 2 bis 5 sekundäre Heiz- und Eindampfungsstufen, insbesondere 3 oder 4. Diese Anzahlen haben sich gerade für Abwärme aus Biogasanlagen besonders bewährt.

Gemäss einer bevorzugten Ausführungsform umfasst die erfindungsgemässe Vorrichtung zusätzlich ein Vorratsgefäss. In diesem Vorratsgefäss kann ein Teil des flüssigen Substrats zwischengelagert werden, bevor es (erneut) durch den Substratkreislauf gefördert wird. Daneben kann das Vorratsgefäss auch dazu genutzt werden, das flüssige Substrat mit irgendwelchen Zusätzen zu versetzen, beispielsweise mit Säure, Base oder einem organischen Lösungsmittel oder Öl. Vorzugsweise ist im Vorratsgefäss eine Misch- oder Rührvorrichtung vorhanden.

Besonders bevorzugt wird frisches Substrat in dieses Vorratsgefäss zugegeben, so dass es mit dem bereits teilweise eingedampften Substrat vermischt wird, bevor es in den eigentlichen Substratkreislauf gelangt. Das Vorratsgefäss ist zu diesem Zweck vorzugsweise mit dem Substrateinlass, der ersten sekundären Heizstufe und der primären Eindampfungsstufe verbunden.

Eine erfindungsgemässe Vorrichtung mit einem Vorratsgefäss eignet sich besonders gut für einen teil-kontinuierlichen Betrieb, wie er oben für das erfindungsgemässe Verfahren beschrieben wurde. Dabei wird das frische Substrat bevorzugt ins Vorratsgefäss zugegeben. Durch das Vorratsgefäss und den teil-kontinuierlichen Betrieb kann die Belastung der Substratpumpe erheblich gesenkt werden: Während eines Grossteils der Laufzeit herrschen im Substratkreislauf relativ geringe Konzentrationen und damit auch tiefe Viskositäten und Drücke; erst in einer Endphase steigen Konzentration, Viskosität und Druck deutlich an. Dadurch ist die Belastung für die Substratpumpe, die Leitungen, die Verbindungselemente, Dichtungen, Armaturen und Messinstrumente die meiste Zeit relativ gering und nur in der kurzen Endphase hoch. Dies ermöglicht auch, nach Abschluss eines Eindampf-Vorgangs quasi ohne Unterbruch direkt mit dem nächsten zu beginnen.

Gemäss einer bevorzugten Ausführungsform sind bei der erfindungsgemässen Vorrichtung nur gerade 1 oder 2 Substratpumpen vorhanden. Diese geringe Anzahl führt natürlich zu einer Kosteneinsparung, nicht nur für die Anschaffung der Pumpen, sondern auch für den zum Betrieb notwendigen Strom. Dank des speziellen Aufbaus der erfindungsgemässen Vorrichtung ist es möglich, das gesamte flüssige Substrat mit nur einer oder zwei Substratpumpen durch den Substratkreislauf zu bewegen.

Die erfindungsgemässe Vorrichtung eignet sich besonders gut für den Einbau von weiteren Komponenten bzw. Verfahrensschritten, wie nachfolgend gezeigt wird. Dadurch kann bei geringem apparativem und energietechnischem Aufwand eine besonders gute Nährstoffverwertung erreicht werden. Ausserdem benötigen diese zusätzlichen Komponenten, wie z.B. Entgaser oder Trockner, durch die Einbindung in den Kreislauf wenig bis gar keine zusätzlich thermische Energie und nur ein Minimum an apparativem und elektrischem Aufwand. Im Gegensatz dazu stehen bei den aus dem Stand der Technik bekannten Verfahren diese Komponenten oft allein und werden mit einem separaten Kreislauf betrieben, so dass eine eigene Pumpe erfordert und meist eine thermische Ankopplung nicht möglich ist.

Gemäss einer bevorzugten Ausführungsform umfasst die erfindungsgemässe Vorrichtung zusätzlich einen Entgaser zum Entgasen des flüssigen Substrats. Mithilfe dieses Entgasers können flüchtige Bestandteile, wie Ammoniak, Phosphor, flüchtige Fettsäuren oder Duftstoffe, abgetrennt werden. Dies geschieht vorzugsweise bereits vor der ersten Eindampfungsstufe, so dass die flüchtigen Bestandteile nicht in die wässrigen Brüden gelangen. Besonders bevorzugt ist der Entgaser daher zwischen der primären Heizstufe und der N-ten sekundären Eindampfungsstufe angeordnet. Dadurch befindet sich der Entgaser auch in dem Bereich des Substratkreislaufs, wo das Substrat die höchste Temperatur erreicht.

Im Entgaser soll üblicherweise möglichst kein Wasser verdampft werden. Aus diesem Grund wird er vorzugsweise bei relativ geringem Unterdruck betrieben, beispielsweise bei ca. 500 mbar. Alternativ wäre es aber auch möglich, gezielt eine bestimmte Menge an Wasser mitzuverdampfen. So kann beispielsweise das verdampfte Ammoniak bei Zugabe von Schwefelsäure in Form einer wässrigen Ammoniumsulfat-Lösung gesammelt werden, wobei diese vorzugsweise eine Konzentration von ca. 40% hat.

Gemäss einer besonders bevorzugten Ausführungsform umfasst der Entgaser einen Entgasungskreislauf, so dass das flüssige Substrat mehrfach durch den Entgaser geleitet werden kann. Dies ermöglicht eine möglichst vollständige Entgasung bei geringem Energie- und apparativem Aufwand.

Grundsätzlich ist es auch möglich, dass der Entgaser eine sekundäre Eindampfungsstufe ersetzt und/oder ein Trockner eine sekundäre Heizstufe. Dies ist besonders bei einer Ausführungsform mit N = 1 vorteilhaft.

Gemäss einer bevorzugten Ausführungsform umfasst die erfindungsgemässe Vorrichtung zusätzlich einen Behandlungstank. Dieser Behandlungstank dient dazu, dem flüssigen Substrat Zusätze zuzuführen oder es gewissen (Vor-)Behandlungen zu unterziehen. Beispiele sind die Zugabe von Säure oder Base, von einem mit Wasser nicht mischbaren organischen Lösungsmittel oder die Durchführung einer NH₃-Strippung oder MAP-Fällung. Der Behandlungstank muss also einen Einlass aufweisen, über welchen die entsprechenden Zusätze zugegeben werden können. Vorzugsweise umfasst er zudem ein Misch- oder Rührmittel.

Je nach gewünschter Behandlung kann der Behandlungstank an einer anderen Stelle im Substratkreislauf angeordnet sein, beispielsweise zwischen der primären Eindampfungsstufe und der ersten sekundären Heizstufe oder zwischen der primären Heizstufe und dem Entgaser, falls vorhanden, und es können auch mehrere Behandlungstanks vorhanden sein. Daneben ist es aber auch möglich, dass der Behandlungstank ausserhalb des Substratkreislaufs angeordnet ist, so dass das flüssige Substrat vor der Einleitung in den eigentlichen Substratkreislauf behandelt werden kann, oder dass das allenfalls vorhandene Vorratsgefäss für eine Behandlung verwendet wird.

Ein Ansäuern des Substrats wird vorzugsweise bei Normaldruck vorgenommen, damit möglichst wenig CO₂ über die Vakuumpumpe abgesaugt werden muss. Die Zugabe von Säure erfolgt daher am besten vor dem Substratkreislauf, im Vorratsgefäss, falls vorhanden, zwischen der primären Eindampfungsstufe und der ersten sekundären Heizstufe oder zwischen der primären Heizstufe und dem Entgaser, falls vorhanden. Eine Zugabe von Base erfolgt vorzugsweise vor dem Substratkreislauf oder im Vorratsgefäss, falls vorhanden. Auch eine allfällige MAP-Fällung wird vorzugsweise vor dem Einleiten des Substrats in den Substratkreislauf durchgeführt.

Das Vorratsgefäss könnte auch als Hygienisierungsstufe verwendet werden, vorzugsweise nach der primären Heizstufe. Um eine ausreichende Verweilzeit des flüssigen Substrats in der Hygienisierungsstufe zu garantieren und gleichzeitig das nötige Puffervolumen möglichst gering zu halten, könnte man das - allenfalls erwärmte und gefüllte - Vorratsgefäss zeitlich und/oder mengenmässig zumindest teilweise vom Substratkreislauf entkoppeln. Alternativ oder zusätzlich kann auch ein allenfalls vorhandener Entgaser vom Substratkreislauf entkoppelt werden.

Gemäss einer bevorzugten Ausführungsform umfasst die erfindungsgemässe Vorrichtung zusätzlich einen Mischkondensator. Der Mischkondensator kann dazu genutzt werden, das flüssige Substrat mit Brüden von ausserhalb zuzuführen. Diese können beispielsweise von einer separaten Trockenvorrichtung stammen.

Besonders bevorzugt erfolgt vor der Einleitung des flüssigen Substrats in die erfindungsgemässe Vorrichtung eine mechanische Separation. Dabei werden Strohteile, Faserstoffe und andere Feststoffanteile entfernt, die sonst die Leitungen der erfindungsgemässen Vorrichtung verstopfen könnten. Typischerweise erfolgt eine solche mechanische Trennung mittels eines Pressschnecken-Separators, einer Zentrifuge, wie eines Dekanters oder Hydrozyklons, eines Bandfilters, eines Trommel- oder eines Bogensiebs.

Die dabei abgetrennten Feststoffe können anschliessend unabhängig vom flüssigen Substrat weiter getrocknet werden, beispielsweise in einer separaten Trockenvorrichtung. Dabei entstehende Brüden werden vorzugsweise dem flüssigen Substrat in der erfindungsgemässen Vorrichtung zugeführt, besonders bevorzugt durch Einleitung in den oben genannten Mischkondensator. Dadurch können nicht nur die in den Feststoffanteilen noch enthaltenen, flüchtigen Nährstoffe (z.B. Ammoniak) im Substrat gebunden werden, sondern es kann auch zusätzlich noch die Wärme aus diesen Brüden für die weitere Erwärmung des flüssigen Substrats verwendet werden.

Besonders bevorzugt ist der Mischkondensator zwischen der primären Heizstufe und einem allenfalls vorhandenen Entgaser (sonst: der N-ten sekundären Eindampfungsstufe) angeordnet. Alternativ wäre es auch möglich, dass der Mischkondensator gleichzeitig als primäre Heizstufe dient.

Wenn die erfindungsgemässe Vorrichtung an einem Standort betrieben wird, wo eine Biogasanlage vorhanden ist, so wird vorzugsweise der heisse Abgasstrom aus der Biogasanlage (> 500 °C) für die Beheizung eines separaten Trockners verwendet, während das Kühlwasser (ca. 90 °C) für die Beheizung der erfindungsgemässen Vorrichtung dient. Der separate Trockner kann beispielsweise zum Trocknen von vorgängig abgetrennten Feststoffen und/oder auch zum Trocknen des in der erfindungsgemässen Vorrichtung gewonnenen Konzentrats verwendet werden.

Besonders bevorzugt werden die vorgängig abgetrennten Feststoffe und das Konzentrat - vor oder nach einem allfälligen Trocknungsvorgang - miteinander kombiniert, um so ein Endprodukt zu erhalten, das im Wesentlichen alle Nährstoffe des Ausgangsproduktes enthält, bei geringerem Flüssigkeits- bzw. Wasseranteil. Dabei entstehen kaum Nebenprodukte, und das Konzentrat bzw. das Gemisch aus Konzentrat und Feststoffen ist unproblematisch zu handhaben.

Die erfindungsgemässe Vorrichtung kann aber natürlich auch mit anderen Wärmequellen und/oder flüssigen Substraten betrieben werden, wobei einzelne Komponenten der Vorrichtung unnötigen werden können. So könnte beispielsweise ein Mischkondensator die primäre Heizstufe ersetzen. Ausserdem könnte auch die aus einem Trockner kommende, noch relativ heisse Abluft (ca. 180 °C) benutzt werden um frisches Substrat vor dem Einleiten in den Substratkreislauf zu erwärmen oder die primäre Heizstufe zu betreiben.

In einem weiteren Aspekt betrifft die vorliegende Erfindung auch die Verwendung der erfindungsgemässen Vorrichtung zur Durchführung des oben beschriebenen erfindungsgemässen Verfahrens, jeweils insbesondere gemäss einer der bevorzugten Ausführungsformen.

Die vorliegende Erfindung wird nachfolgend anhand der in den
Figuren gezeigten Ausführungsbeispiele weiter veranschaulicht. Es zeigt:
   - Fig. 1: eine schematische Darstellung einer ersten Ausführungsform der erfindungsgemässen Vorrichtung; und
   - Fig. 2: eine schematische Darstellung einer zweiten Ausführungsform der erfindungsgemässen Vorrichtung.

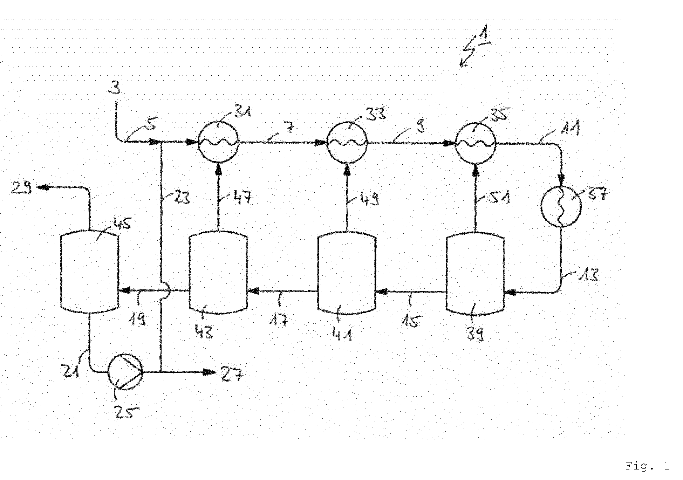

Figur 1 zeigt, rein schematisch, eine erste Ausführungsform einer erfindungsgemässen Vorrichtung 1 zum Eindampfen eines flüssigen Substrats, insbesondere von Gülle, Schlempe oder Gärresten. Dabei handelt es sich um eine sehr einfache Ausführungsform, quasi die "Basisvariante".

Die Vorrichtung 1 umfasst einen Substrateinlass 3, einen Substratkreislauf mit mehreren Substratleitungen 5, 7, 9, 11, 13, 15, 17, 19, 21, 23, eine Substratpumpe 25, einen Konzentratauslass 27 und einen Kondensatauslass 29. Im Betrieb wird das flüssige Substrat über den Substrateinlass 3 in den Substratkreislauf eingeführt und mittels der Substratpumpe 25 durch den Substratkreislauf gefördert. Dabei durchläuft das flüssige Substrat nacheinander drei sekundäre Heizstufen 31, 33, 35, eine primäre Heizstufe 37, drei sekundäre Eindampfungsstufen 39, 41, 43 und eine primäre Eindampfungsstufe 45.

Der Substratkreislauf umfasst die folgenden Verbindungen: Substrateinlass 3 - Substratleitung 5 - erste sekundäre Heizstufe 31 - Substratleitung 7 - zweite sekundäre Heizstufe 33 - Substratleitung 9 - dritte sekundäre Heizstufe 35-Substratleitung 11 - primäre Heizstufe 37 - Substratleitung 13 - dritte sekundäre Eindampfungsstufe 39 - Substratleitung 15 - zweite sekundäre Eindampfungsstufe 41 - Substratleitung 17 - erste sekundäre Eindampfungsstufe 43 - Substratleitung 19 - primäre Eindampfungsstufe 45 - Substratleitung 21-Substratpumpe 25 - Substratleitung 23. Je nach Ausgangskonzentration des flüssigen Substrats und gewünschter Endkonzentration wird das flüssige Substrat mehr oder weniger oft durch den Substratkreislauf gefördert und dabei schrittweise immer weiter aufkonzentriert. Sobald die gewünschte Endkonzentration erreicht ist, wird das übrig gebliebene flüssige Substrat als Konzentrat dem Konzentratauslass 27 zugeleitet.

In den sekundären Heizstufen 31, 33, 35 und der primären Heizstufe 37 wird das flüssige Substrat schrittweise erwärmt. In der gezeigten Ausführungsform sind sowohl die primäre Heizstufe 37 als auch die sekundären Heizstufen 31, 33, 35 als Wärmetauscher ausgestaltet. Die primäre Heizstufe 37 wird mit externer Wärme betrieben, beispielsweise mittels Elektroofen oder Abwärme aus einer Biogasanlage. Die für die sekundären Heizstufen 31, 33, 35 notwendige Wärmeenergie wird hingegen aus in den sekundären Eindampfungsstufen 39, 41, 43 entstehenden Brüden gewonnen. Zu diesem Zweck führt je eine Brüdenleitung 47, 49 bzw. 51 von der ersten sekundären Eindampfungsstufe 43 zur ersten sekundären Heizstufe 31, von der zweiten sekundären Eindampfungsstufe 41 zur zweiten sekundären Heizstufe 33 bzw. von der dritten sekundären Eindampfungsstufe 39 zur dritten sekundären Heizstufe 35.

Nach dem Erwärmen in der primären Heizstufe 37 wird das flüssige Substrat zunächst in den drei sekundären Eindampfungsstufen 39, 41, 43 und anschliessend in der primären Eindampfungsstufe 45 bei reduziertem Druck schrittweise bei konzentriert. In der gezeigten Ausführungsform sind alle vier Eindampfungsstufen 39, 41, 43, 45 als Entspannungsgefässe ausgebildet. Beim Eindampfen in den Eindampfungsstufen 39, 41, 43, 45 entstehen Brüden, die im Falle der sekundären Eindampfungsstufen 39, 41, 43, wie oben beschreiben, zum Erwärmen des flüssigen Substrats in den zugeordneten sekundären Heizstufen verwendet wird. In der primären Eindampfungsstufe entstehende Brüden werden dem Kondensatauslass 29 zugeführt.

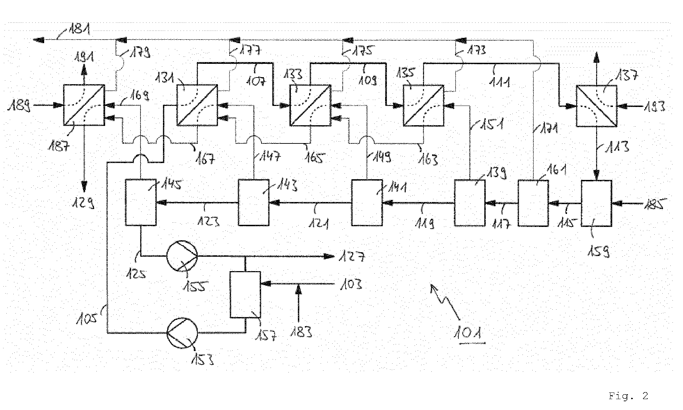

Figur 2 zeigt eine etwas kompliziertere Variante einer erfindungsgemässen Vorrichtung 101. Diese entspricht einer bevorzugten Ausführungsform.

Die Vorrichtung 101 umfasst ebenfalls einen Substrateinlass 103, einen Substratkreislauf mit mehreren Substratleitungen 105, 107, 109, 111, 113, 115, 117, 119, 121, 123, 125, einen Konzentratauslass 127 und einen Kondensatauslass 129. Auch die drei sekundären Heizstufen 131, 133, 135, die primäre Heizstufe 137, die drei sekundären Eindampfungsstufen 139, 141, 143 und die primäre Eindampfungsstufe 145 sind analog ausgestaltet, ebenso wie die Brüdenleitungen 147, 149, 151.

Der Eindampfprozess wird mit dieser Vorrichtung 101 im Wesentlichen analog zum Verfahren mit der in Figur 1 gezeigten Vorrichtung 1 durchgeführt. Es werden daher nachfolgend vor allem die Unterschiede zwischen den beiden Vorrichtungen 1, 101 hervorgehoben.

In Figur 2 sind gewisse Komponenten etwas detaillierter dargestellt - z.B. die Heizstufen 131, 133, 135, 137 - und die Materialflüsse klarer eingezeichnet. Ausserdem sind aber bei der hier gezeigten Vorrichtung 101 auch zusätzliche Komponenten vorhanden im Vergleich zur in Figur 1 gezeigten Vorrichtung 1:
- Die Vorrichtung 101 umfasst nicht nur eine, sondern zwei Substratpumpen 153, 155 zur Förderung des Substrats durch den Substratkreislauf bzw. zum Konzentratauslass 127.
- Zwischen den beiden Substratpumpen 153, 155 ist ein Vorratsgefäss 157 vorhanden.
- Zwischen der primären Heizstufe 137 und der dritten sekundären Eindampfungsstufe 139 sind ein Mischkondensator 159 und eine Entgaser 161 vorhanden.
- Zusätzlich sind aus Figur 2 auch die Kondensatleitungen 163, 165, 167 sowie die Vakuumleitungen 171, 173, 175, 177, 179, 181 ersichtlich.

Das Vorratsgefäss 157 ist mit dem Substrateinlass 103 verbunden, so dass frisches Substrat direkt dem Vorratsgefäss zugeführt und dort mit flüssigem Substrat aus dem Substratkreislauf vermischt werden kann. Dadurch eignet sich die in Figur 2 gezeigte Vorrichtung 101 besonders gut für einen teil-kontinuierlichen Betrieb. Das Vorratsgefäss 157 ist über die Substratleitung 105 mit der ersten sekundären Heizstufe 131 und über die Substratleitung 125 mit der primären Eindampfungsstufe 145 verbunden. Zwischen dem Substrateinlass 103 und dem Vorratsgefäss 157 besteht die Möglichkeit, das flüssigen Substrat vor dem Einführen in den eigentlichen Substratkreislauf über einen Einlass 183 beispielsweise mit Säure, Base oder einem mit Wasser nicht mischbaren organischen Lösungsmittel oder Öl zu behandeln. Vorzugsweise wird hier Säure zugegeben.

Der Mischkondensator 159 wird vorzugsweise dazu genutzt, dem flüssigen Substrat Brüden aus eine separaten externen Trocknungsanlage (hier nicht gezeigt) zuzuführen. Dazu weist der Mischkondensator einen Brüdeneinlass 185 auf. Der Mischkondensator 159 ist über die Substratleitung 113 mit der primären Heizstufe 137 und über die Substratleitung 115 mit dem Entgaser 161 verbunden. Alternativ wäre es auch möglich, dass der Mischkondensator 159 zwischen der N-ten sekundären Heizstufe 135 und der primären Heizstufe 137 angeordnet ist.

Im Entgaser 161 kann das flüssige Substrat vor den Eindampfungsstufen 139, 141, 143, 145 entgast werden. Dies geschieht vorzugsweise bei leichtem Unterdruck, welcher über die Vakuumleitung 171 erzeugt wird, so dass alle flüchtigen Komponenten entfernt aber möglichst kein Wasser verdampft wird. Der Entgaser 161 ist zusätzlich über die Substratleitung 117 mit der dritten sekundären Eindampfungsstufe 139 verbunden.

Vorzugsweise werden die Brüden aus den sekundären Eindampfungsstufen 139, 141, 143 in den zugeordneten sekundären Heizstufen 131, 133, 135 so weit abgekühlt, dass sie zumindest annähernd vollständig kondensieren. Die dabei entstehenden Kondensate werden über die Kondensatleitungen 163, 165, 167 der jeweils tieferen Heizstufe 131, 133 bzw. einem Endkondensator 187 zugeführt. Die Brüden aus der primären Eindampfungsstufe 145 werden über die Brüdenleitung 169 direkt dem Endkondensator 187 zugeführt. Der Endkondensator wird mittels Fremdkühlung 189 betrieben. Die dabei entstehende Ableitwärme 191 wird nach aussen abgegeben. Zusätzlich sind aus Figur 2 auch die Vakuumleitungen 171, 173, 175, 177, 179, 181 ersichtlich. Diese sorgen für den gewünschten Unterdruck in den Eindampfungsstufen 139, 141, 143, 145 und im Entgaser 161 und dienen auch dazu, die Brüden aus den Eindampfungsstufen 139, 141, 143, 145 den zugeordneten sekundären Heizstufen 131, 133, 135 bzw. dem Endkondensator 187 zuzuführen.

Wie bereits in Zusammenhang mit Figur 1 beschrieben, wird die primäre Heizstufe 137 mit Fremdwärme 193 betrieben, beispielsweise aus einer Biogasanlage (nicht gezeigt).

## Patentansprüche

1. Verfahren zum Eindampfen eines flüssigen Substrats, insbesondere eines wässrigen Substrats,
wobei das flüssige Substrat mehrfach durch einen Substratkreislauf mit einer primären Heizstufe (37, 137) zum Erwärmen und einer primären Eindampfungsstufe (45, 145) zum Konzentrieren bei reduziertem Druck gefördert wird,
**dadurch gekennzeichnet,**
**dass** das flüssige Substrat vor der primären Heizstufe (37, 137) N sekundären Heizstufen (31, 33, 35, 131, 133, 135) zugeführt und dort erwärmt wird und nach dem Erwärmen in der primären Heizstufe (37, 137) N sekundären Eindampfungsstufen (39, 41, 43, 139, 141, 143) zugeführt und dort bei reduziertem Druck konzentriert wird, bevor es der primären Eindampfungsstufe (45, 145) zugeführt wird, wobei N ≥ 1 ist,
**dass** das flüssige Substrat die sekundären Heizstufen (31, 33, 35, 131, 133, 135) in der Reihenfolge von der ersten (31, 131) zur N-ten (35, 135) und die sekundären Eindampfungsstufen (39, 41, 43, 139, 141, 143) in der Reihenfolge von der N-ten (39, 139) zur ersten (43, 143) durchläuft,
**dass** der n-ten sekundären Heizstufe (31, 33, 35, 131, 133, 135) die n-te sekundäre Eindampfungsstufe (39, 41, 43, 139, 141, 143) zugeordnet ist, und
**dass** in einer sekundären Eindampfungsstufe (39, 41, 43, 139, 141, 143) entstehende Brüden der zugeordneten sekundären Heizstufe (31, 33, 35, 131, 133, 135) zugeführt werden.

2. Verfahren nach Anspruch 1, **dadurch gekennzeichnet, dass** das flüssige Substrat organische Abwässer oder Abfälle, insbesondere Gülle, Schlempe oder Gärreste umfasst.

3. Verfahren nach Anspruch 1 oder 2, **dadurch gekennzeichnet, dass** der Flüssiganteil, insbesondere der Wasseranteil, des flüssigen Substrats um mindestens einen Viertel reduziert, vorzugsweise um mindestens die Hälfte.

4. Verfahren nach einem der Ansprüche 1 bis 3, **dadurch gekennzeichnet, dass** das Eindampfen teil-kontinuierlich erfolgt, wobei vorzugsweise in einem ersten Zeitabschnitt kontinuierlich mehr flüssiges Substrat zugeführt wird, in einem zweiten Zeitabschnitt kein weiteres flüssiges Substrat zugeführt wird und in einem dritten Zeitabschnitt eingedampftes Konzentrat abgeführt und optional neues flüssiges Substrat zugeführt wird.

5. Verfahren nach einem der Ansprüche 1 bis 4, **dadurch gekennzeichnet, dass** das flüssige Substrat vor, zwischen und/oder nach den Heizstufen (31, 33, 35, 37, 131, 133, 135, 137) mit Säure oder Base behandelt, und/oder mit einem mit Wasser nicht mischbaren organischen Lösungsmittel behandelt und/oder einer NH3-Strippung oder MAP-Fällung unterzogen wird.

6. Verfahren nach einem der Ansprüche 1 bis 5, **dadurch gekennzeichnet, dass** das flüssige Substrat vor der N-ten Eindampfungsstufe (39, 139) entgast wird, vorzugsweise zwischen der primären Heizstufe (37, 137) und der N-ten Eindampfungsstufe (39, 139).

7. Verfahren nach einem der Ansprüche 1 bis 6, **dadurch gekennzeichnet, dass** die in den Eindampfungsstufen (39, 41, 43, 45, 139, 141, 143, 145) erhaltenen Brüden und/oder, falls vorhanden, beim Entgasen erhaltene Gase gewaschen werden.

8. Vorrichtung (1, 101) zum Eindampfen eines flüssigen Substrats, umfassend
einen Substrateinlass (3, 103),
einen Substratkreislauf umfassend mehrere Substratleitungen (5, 7, 9, 11, 13, 15, 17, 19, 21, 23, 105, 107, 109, 111, 113, 115, 117, 119, 121, 123, 125), der mit dem Substrateinlass (3, 103) verbunden ist, mindestens eine Substratpumpe (25, 153, 155) zum Fördern des flüssigen Substrats durch den Substratkreislauf, eine primäre Heizstufe (37, 137) zum Erwärmen des flüssigen Substrats, die mit einer Wärmezufuhr (193) verbunden ist,
eine primäre Eindampfungsstufe (45, 145) zum Konzentrieren des erwärmten flüssigen Substrats bei reduziertem Druck, die mit einem Endkondensator (187) verbunden ist,
einen Konzentratauslass (27, 127), der über eine Konzentratleitung mit der primären Eindampfungsstufe (45, 145) verbunden ist, und
einen Kondensatauslass (29, 129), der über eine Kondensatleitung dem Endkondensator (187) verbunden ist, **gekennzeichnet, durch**
N seriell angeordnete sekundäre Heizstufen (31, 33, 35, 131, 133, 135) zum Erwärmen des flüssigen Substrats, wobei die erste sekundäre Heizstufe (31, 131) über eine Substratleitung (5, 105) mit dem Substrateinlass (3, 103) verbunden ist, die N-te sekundäre Heizstufe (35, 135) über eine Substratleitung (11, 111) mit der primären Heizstufe (37, 137) verbunden ist und jeweils zwei aufeinander folgende sekundäre Heizstufen (31, 33, 35, 131, 133, 135) über eine Substratleitung (7, 9, 107, 109) miteinander verbunden sind, und wobei die erste sekundäre Heizstufe (31, 131) über eine Kondensatleitung (167) mit dem Kondensatauslass (29, 129) verbunden ist, N seriell angeordnete sekundäre Eindampfungsstufen (39, 41, 43, 139, 141, 143) zum Konzentrieren des erwärmten flüssigen Substrats bei reduziertem Druck, wobei die N-te sekundäre Eindampfungsstufe (39, 139) über eine Substratleitung (13, 113, 115, 117) mit der primären Heizstufe (37, 137) verbunden ist, die erste sekundäre Eindampfungsstufe (43, 143) über eine Substratleitung (19, 123) mit der primären Eindampfungsstufe (45, 145) verbunden ist und jeweils zwei aufeinander folgende sekundäre Eindampfungsstufen (39, 41, 43, 139, 141, 143) über eine Substratleitung (15, 17, 119, 121) miteinander verbunden sind,
wobei N ≥ 1 ist und
wobei der n-ten sekundären Heizstufe (31, 33, 35, 131, 133, 135) die n-te sekundäre Eindampfungsstufe (39, 41, 43, 139, 141, 143) zugeordnet und mit dieser über eine Brüdenleitung (47, 49, 51, 147, 149, 151) verbunden ist.

9. Vorrichtung (1, 101) nach Anspruch 8, **dadurch gekennzeichnet, dass** N = 1 bis 12 ist, vorzugsweise 2 bis 5 und besonders bevorzugt 3 oder 4.

10. Vorrichtung (101) nach Anspruch 8 oder 9, zusätzlich umfassend ein Vorratsgefäss (157), welches vorzugsweise mit dem Substrateinlass (103), der ersten sekundären Heizstufe (131) und der primären Eindampfungsstufe (145) verbunden ist.

11. Vorrichtung (1, 101) nach einem der Ansprüche 8 bis 10, **dadurch gekennzeichnet, dass** die Anzahl Substratpumpen (25, 153, 155) 1 oder 2 ist.

12. Vorrichtung (101) nach einem der Ansprüche 8 bis 11, zusätzlich umfassend einen Entgaser (161) zum Entgasen des flüssigen Substrats, der vorzugsweise zwischen der primären Heizstufe (137) und der N-ten sekundären Eindampfungsstufe (139) angeordnet ist, wobei der Entgaser (161) besonders bevorzugt einen Entgasungskreislauf umfasst, so dass das flüssige Substrat mehrfach durch den Entgaser (161) geleitet werden kann.

13. Vorrichtung (1, 101) nach einem der Ansprüche 8 bis 12, zusätzlich umfassend einen Behandlungstank, in welchem das flüssigen Substrat mit Säure oder Base behandelt, und/oder mit einem mit Wasser nicht mischbaren organischen Lösungsmittel behandelt und/oder einer NH₃-Strippung oder MAP-Fällung unterzogen werden kann, wobei der Behandlungstank vorzugsweise vor dem Substratkreislauf, zwischen der primären Eindampfungsstufe (45, 145) und der ersten sekundären Heizstufe (39, 139) oder zwischen der primären Heizstufe (37, 137) und dem Entgaser (161), falls vorhanden, angeordnet ist.

14. Vorrichtung (101) nach einem der Ansprüche 8 bis 13, zusätzlich umfassend einen Mischkondensator (159).

15. Verwendung der Vorrichtung (1, 101) gemäss einem der Ansprüche 8 bis 14 zur Durchführung des Verfahrens gemäss einem der Ansprüche 1 bis 7.
